# EUROPÄISCHE PATENTSCHRIFT

(11) **EP 1 122 282 B1**
(45) Veröffentlichungstag und Bekanntmachung des Hinweises auf die Patenterteilung: **21.06.2006**
(21) Anmeldenummer: 01101161.6
(22) Anmeldetag: 23.01.2001
(51) Int. Cl.: C08L 67/06, C08F 299/00

(54) **Emissionarme Elektroisoliermassen**
Low emission electrical insulating masses
Masses électriquement isolantes à faible émission

(30) Priorität: 24.01.2000 DE 10002804
(43) Veröffentlichungstag der Anmeldung: 08.08.2001
(73) Patentinhaber: Altana Electrical Insulation GmbH, 46483 Wesel (DE)
(72) Erfinder: Blum, Rainer, 67069 Ludwigshafen (DE); Hegemann, Günter, 22301 Hamburg (DE); Eichhorst, Manfred, 22113 Oststeinbek (DE)
(74) Vertreter: Isenbruck, Günter

(56) Entgegenhaltungen:
- WO-A-95/05403
- WO-A-99/06463
- US-A- 4 160 759
- US-A- 5 146 005
- US-A- 5 373 032
- US-A- 5 902 837

## Beschreibung

Die Erfindung betrifft Formmassen auf der Basis ungesättigter Polyester und bevorzugte Verwendungen dieser Formmassen.

Tränk-, Verguß- und Überzugsmassen für elektrotechnische Bauteile, wie Motorwicklungen, Transformatorwicklungen und ähnliches, sind zumeist aus Formmassen auf der Basis ungesättigter Polyester aufgebaut, die in vinylisch und/oder allylisch ungesättigten Verbindungen, wie Styrol, α-Methylstyrol, Vinyltoluol, Allylphthalaten und monomeren oder oligomeren Acryl- oder Vinylestern gelöst sind.

Unter Tränk-, Verguß- und Überzugsmassen werden dabei Harzmassen verstanden, die in der Elektrotechnik nach den allgemein bekannten Verfahren der Tauchtränkung, der Heißtauchtränkung mit anschließender UV-/Wärmehärtung, der Träufeltechnik, dem Tauchrollierverfahren, dem Überflutungsverfahren und dem Verguß zur Tränkung von Wicklungen angewendet werden, gegebenenfalls unter zusätzlicher Anwendung von Vakuum und/oder Druck. Auch die Imprägnierung von Trägermaterialien für flächige Isolierstoffe, wie Glasseiden, Glimmerbänder und andere saugfähige Stoffe sowie Kombinationen hiervon, werden unter diesem Begriff verstanden. Die Härtung kann gegebenenfalls im teilgehärteten Zustand abgebrochen werden, um weiter härtbare Prepregs zu erhalten.

Nachteilig bei diesen bekannten Formmassen ist die Verwendung der weiter oben erwähnten ungesättigten Monomeren, die zur Einstellung der erforderlichen, relativ niedrigen Verarbeitungsviskositäten und für die Aushärtung der ungesättigten Polyesterharze zwingend notwendig sind. Diese Stoffe sind oftmals gesundheitsschädlich und hautreizend. Bei Anwendungen von Tränkmitteln mit diesen Stoffen treten häufig außerdem Masseverluste von 20 bis 30 % auf. Diese erheblichen Mengen müssen von der Arbeitsstelle entfernt werden, um Gesundheitsgefahren für die Beschäftigten zu vermeiden. Die abgesaugten Verdunstungsmengen werden in der Regel in Abluftverbrennungen entsorgt. Dabei entstehen unerwünschte Emissionen. Die Verbrennung dieser Stoffmengen ist außerdem unwirtschaftlich. Des weiteren besteht die Gefahr, daß diese monomeren Stoffe nicht vollständig bei der Härtung mit-eingebaut werden. In den gehärteten Massen verbleibende Restmonomere können besonders aus Elektrcisoliermassen, die in der Regel beim praktischen Einsatz warm werden, austreten und zu Geruchsbelästigungen und Gesundheitsschädigungen führen. Sie können auch in den Formmassen allmählich nachhärten, wodurch sich deren Gebrauchseigenschaften unerwünscht verändern.

Bei der Verwendung der Formmassen als Tränk-, Verguß- und Überzugsmassen für elektrotechnische Bauteile werden an ihre thermische Stabilität und Wärmeformbeständigkeit erhebliche Anforderungen gestellt. Dabei ist es bekannt, ungesättigte Polyesterharze mit Dicyclopentadien zu modifizieren, um auf diese Weise nach der Aushärtung thermisch beständige Formkörper mit erhöhter Wärmeformbeständigkeit zu erhalten. Je nach Reaktionstemperatur und Säurezahl des Polyesters wird das Dicyclopentadien entweder endständig an eine Carboxyl- bzw. Hydroxylgruppe oder aber nach Spaltung zu Cyclopentadien an die copolymerisierbare Doppelbindung der Ethylendicarbonsäureester-Strukturen addiert.

Um darüber hinaus Formkörper mit noch besserer thermischer Stabilität und Wärmeformbeständigkeit zu erhalten, wird in der EP-A-0 101 585 beschrieben, die ungesättigten Polyester mit Dicyclopentadien oder auch anderen 1,3-Diolefinen zu modifizieren, die als Alkoholkomponente N-Hydroxyalkylimide einfach ungesättigter, gegebenenfalls substituierter cycloaliphatischer 1,2-Dicarbonsäuren enthalten.

Demgegenüber offenbart die EP-A-0 118 786 Formkörper aus ungesättigten Polyesterharzen, die mit Dicyclopentadien modifiziert sein können, Cyclopenten- oder Cyclohexen-Gruppierungen enthalten und in einem aufwendigen, vorzugsweise zweistufig durchgeführten Verfahren hergestellt werden. Dabei wird die Härtung bei Temperaturen oberhalb von 200°C in Gegenwart von oberhalb 140°C zerfallenden Radikalbildnern oder durch Bestrahlung mit beschleunigten Elektronen erreicht.

Den Nachteil der hohen Temperaturen oberhalb von 200°C bei der Härtung der Formkörper gemäß der EP-A-0 118 786 umgeht die EP-A-0 260 688 durch ein modifiziertes zweistufiges Verfahren, bei dem die hohen Temperaturen bei der in der zweiten Stufe erfolgenden Nachhärtung durch den Einsatz einer speziellen Auswahl von Radikalbildnern auf 120 bis 200°C abgesenkt werden.

Allen diesen Formkörpern und Formmassen ist gemeinsam, daß sie aus Polyesterharzen erhalten werden, die in vinylisch ungesättigten Monomeren gelöst werden müssen.

Ausgehend von diesem Stand der Technik ist es daher Aufgabe der vorliegenden Erfindung, solche Formmassen bereitzustellen, die als Tränk-, Verguß- und Überzugsmassen für die Elektroisolierung verwendet werden können, eine ausreichende thermische Stabilität und Wärmeformbeständigkeit aufweisen und keine vinylisch ungesättigten Monomeren zu ihrer Lösung benötigen.

Diese Aufgabe wird gelöst durch eine Formmasse auf der Basis ungesättigter gemäß Anspruch 1.

Die in dieser Weise aufgebauten erfindungsgemäßen Formmassen weisen eine ausreichend niedrige Verarbeitungsviskosität auf und können hervorragend durch Wärme und/oder energiereiche Strahlung, wie UV-Licht, gehärtet werden. Sehr vorteilhaft ist auch, daß sie bei der Verarbeitung nur äußerst geringe Masseverluste aufweisen. Damit stehen Formmassen zur Verfügung, die ohne die üblichen, weiter oben als vinylisch ungesättigte Monomere näher bezeichneten Reaktivverdünner verwendbar sind. Es ist aber technisch grundsätzlich möglich, diese bekannten ethylenisch ungesättigten Reaktivverdünner in untergeordneten Mengen ebenfalls einzusetzen. Dadurch können zum Beispiel styrolarme Formmassen hergestellt werden, die trotzdem die sonstigen vorteilhaften Eigenschaften der erfindungsgemäßen Formmassen aufweisen und die gesetzlichen Grenzwerte für die Styrolkonzentrationen oder -emissionen unterschreiten.

Besonders vorteilhaft ist auch, daß die erfindungsgemäßen Formmassen auf den bereits vorhandenen, nicht oder nur geringfügig modifizierten Anlagen verarbeitet werden können. Die Formmassen sind sowohl unter energiereicher Strahlung, bevorzugt UV-Licht, als auch radikalisch bei Raumtemperatur mit bekannten Kombinationen von Peroxiden und Co-Initiatoren, zum Beispiel Schwermetallsalzen, sowie thermisch mit radikalliefernden Startern, wie Peroxiden, Azostartern oder C-C-labilen Verbindungen, härtbar. Es ist auch möglich, eine beliebige Kombination der genannten Methoden zur Härtung einzusetzen. Beispielsweise können die Formmassen zunächst mit UV-Licht an der Oberfläche gehärtet und dann mit Verbindungen, die thermisch Radikale bereitstellen, unter Erwärmung ausgehärtet werden.

Die polymeren Vernetzer b sind Polyester, die bestimmte terminal, bezogen auf die Polymerhauptkette, Isoprenylether- und/oder Propenylethergruppen und/oder Isoprenylester- und/oder Propenylestergruppen aufweisen. Die Polymerhauptkette kann dabei linear, beliebig verzweigt oder dentrimer aufgebaut sein. Auch in der Hauptkette nur C-C-verknüpfte Verbindungen und Verbindungen mit kettenständigen Ethergruppen sind bekannt. Methoden zur Herstellung von 1-Propenylethern werden zum Beispiel in J. V. Crivello et al, in Macromolekular Engineering, Plenum Press, New York, 1995, beschrieben. Kommerziell verfügbar sind Propenylether von Polyolen wie 1,6-Di-(1-propenoxy)-decan, Tetraethylenglycoldi(1-propenylether), Isopropenylbenzyl-m-isopropylisocyanat, 1-Propenylglycidylether und Isoprenol.

Mit den genannten Isocyanaten, Glycidylethern und Isoprenol können terminal funktionalisierte polymere Verbindungen aufgebaut werden. Bevorzugt sind Polyester, die nach den allgemein bekannten Regeln erhältlich sind. Bei Einsatz der bevorzugten Polyester kann die erfindungsgemäße Terminierung dadurch erreicht werden, daß die oben genannten Verbindungen, nämlich Isopropenylbenzyl-m-isopropylisocyanat, 1-Propenylglycidylether und Isoprenol, mitverwendet werden.

Über den Aufbau der polymeren Vernetzer b) ist es möglich, in einem weiten Bereich die Endeigenschaften der ausgehärteten Massen zu bestimmen. Lineare Vernetzer ohne seitenständige und mit ausschließlich terminalen Isoprenyl- und/oder Propenylgruppen ergeben eine weitmaschigere Vernetzung mit größerer Netzbogenlänge und höherer Flexibilität der ausgehärteten Formmassen. Hochverzweigte und/oder seitenständig hochfunktionalisierte Vernetzer ergeben eine hohe Vernetzungsdichte und nach dem Aushärten der Formmassen harte oder auch spröde Formkörper.

Bevorzugt werden die polymeren Vernetzer b) niedrigviskos eingestellt und als Reaktivverdünner für hoch auskondensierte, hochviskose, ungesättigte Polyesterharze a) verwendet. Solche Kombinationen ergeben nach der Härtung besonders thermostabile Formkörper.

Es ist aber auch möglich, niedriger auskondensierte und/oder unter Mitverwendung von monofunktionellen Stoffen hergestellte ungesättigte Polyesterharze a) mit höherviskos eingestellten Vernetzern b) zu kombinieren.

Die ungesättigten Polyester a) bzw. Polyesterharze - wobei diese Begriffe im Sinne der Erfindung synonym verwendet werden - der erfindungsgemäßen Formmassen bestehen aus an sich bekannten Polyesterharzen, wobei diese und/oder der polymere Vernetzer b) Struktureinheiten der allgemeinen Formeln I und/oder II, die abgeleitet sind von Dicyclopentadien (DCPD), aufweisen.

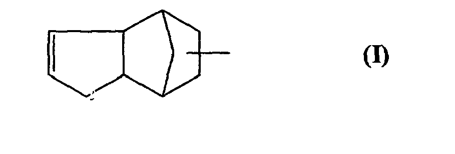

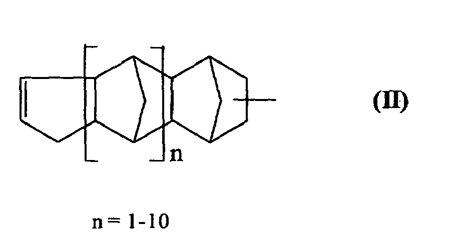

Bevorzugt werden diese Gruppen über die leicht zugänglichen esterartigen DCPD-Addukte gemäß den allgemeinen Formeln III und IV an Polycarbonsäuren eingeführt:

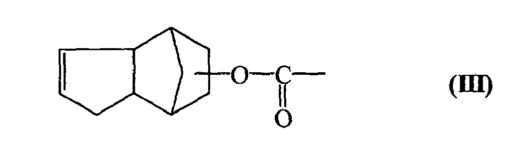

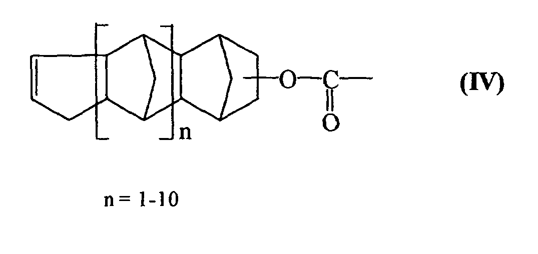

Sehr leicht zugänglich sind die Addukte von Maleinsäureanhydrid und Wasser an DCDP gemäß den allgemeinen Formeln V und VI:

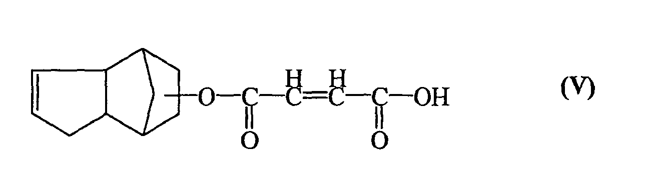

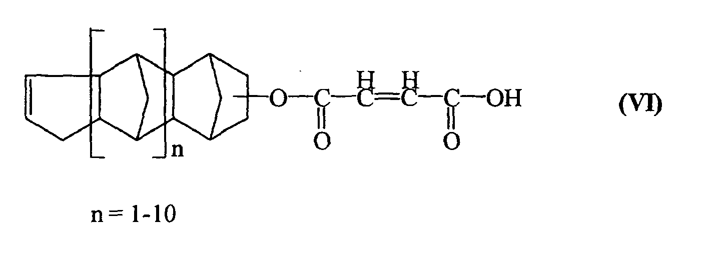

Außerdem ist Dihydrodicyclopentadienol gemäß der allgemeinen Formel VII kommerziell verfügbar und kann beim Aufbau der ungesättigten Polyester mitverwendet werden. Dadurch werden ebenfalls die Strukturen der allgemeinen Formeln I und II eingeführt und ungesättigte Polyester a) erhalten.

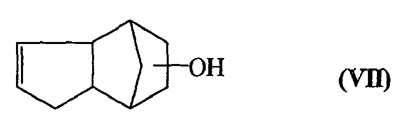

Der Aufbau der Polyester a) erfolgt nach den im Stand der Technik bekannten Verfahren zur Herstellung von Polyestern, in der Regel durch Polykondensation von mehrfachfunktionellen Hydroxylverbindungen mit mehrfachfunktionellen Säuren bzw. deren Anhydriden bei höheren Temperaturen. Es kann vorteilhaft sein, von den Estern solcher Verbindungen auszugehen und die Polyester durch Umesterung bei höheren Temperaturen zu erhalten, weil solche Umesterungen teilweise leichter und schneller ablaufen als die direkten Veresterungen. Der ungesättigte Charakter der Polyester a) entsteht durch die Mitverwendung von ungesättigten Verbindungen in der Säure- und/oder ungesättigten Alkoholkomponente, zum Beispiel Alkendiolen und/oder oxalkylierten Alkendiolen. Bevorzugt werden ungesättigte Polyesterharze a) mit Maleinsäure bzw. Maleinsäureanhydrid und/oder Fumarsäure erhalten. Diese Verbindungen sind technisch sehr kostengünstig verfügbar. Weiter können durch (Mit)-Verwendung von mehrfachfunktionellen Aminen auch Polyester a) mit Amidstrukturen erhalten werden. Die Mitverwendung monofunktioneller Einsatzstoffe ist auch möglich, zum Beispiel um das Molekulargewicht zu regulieren.

Im folgenden werden exemplarisch geeignete Verbindungen für den Aufbau der ungesättigten Polyester a) genannt. Diese sind Adipinsäure, Korksäure, Phthalsäureisomere, Tetrahydrophthalsäure, Endomethylen-tetrahydrophthalsäure, Hexahydrophthalsäure, Fumarsäure, Maleinsäure, Itaconsäure, Citraconsäure, Trimellitsäure, Pyromellitsäure, Ethylenglykol, Polyethylenglykole, Propylenglykol, Polypropylenglykole, Butandiolisomere, Hexandiol, Neopentylglykol, Trimethylolpropan, Glycerin, Pentaerythrith, Bisphenol A, hydriertes Bisphenol A, OH-polyfunktionelle Polymere, wie Hydroxylgruppen-modifizierte Polybutadiene oder Hydroxylgruppen-tragende Polyurethanprepolymere und Epoxydharze, polyfunktionelle Naturstoffe oder deren Folgeprodukte, wie Leinölfettsäure, Dimer- und Polymerleinölfettsäure, Rizinusöl oder Rizinusölfettsäure.

Außerdem können Amid- und Imidstrukturen eingeführt werden. Die Einführung solcher Strukturen ist dem Fachmann zum Beispiel durch die DE-A 15 700 273 und DE-A 17 200 323 bekannt. Solche Polyesteramide oder -imide können besondere Anforderungen, z.B. bezüglich der Wärmestandfestigkeit, häufig besser erfüllen als reine Polyester.

Die Einführung der Struktureinheiten gemäß den allgemeinen Formeln I und II kann bevorzugt durch die Verwendung saurer Ester gemäß den allgemeinen Formeln III bis VI bei der Polykondensation erfolgen. Oligo-DCPD-Gemische können in an sich bekannter Weise durch Polycycloaddition von Cyclopentadien unter Druck bei Temperaturen zwischen 170 und 300°C erhalten werden. Die Reaktionsprodukte können anschließend destillativ aufgearbeitet oder direkt, z.B. mit Maleinsäureanhydrid und Wasser, zu den Verbindungen der allgemeinen Formeln V und VI umgesetzt werden. Des weiteren ist es möglich, Polyester mit einem Überschuß von Säure herzustellen und diese dann mit DCPD umzusetzen. Für einen hohen Umsatz ist dabei die Verwendung von Katalysatoren, wie Bortrifluoridetherat, notwendig. Bei höheren Temperaturen und Druck werden dabei auch Oligo-DCPD-Strukturen gebildet.

Enthalten die Polyester a) Doppelbindungen in der Polymerkette, z.B. als Maleinsäure- oder Fumarsäureester, so werden durch Propfung mit Cyclopentadien Endomethylentetrahydrophtalsäurestrukturen gemäß der allgemeinen Formel VIII erzeugt:

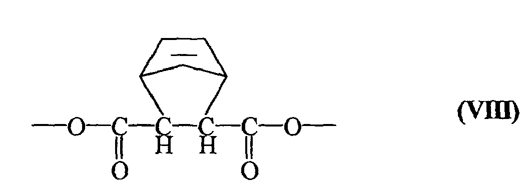

Für den jeweiligen Einsatzzweck können an die Polyester a), aus denen die Formmassen aufgebaut sind, spezielle Anforderungen in Bezug auf die Härte, Elastizität, Viskosität, den Erweichungspunkt o.ä. gestellt werden. Im Hinblick auf diese besonderen Anforderungen erfolgt dann der Aufbau der Polyester nach den dem Fachmann an sich bekannten Regeln. So ist es z.B. bekannt, die Elastizität ausgehärteter Polyesterharze durch die Kettenlänge der Polyole oder Polycarbonsäuren zu variieren. Beispielsweise sind Polyesterharze, die unter Verwendung von Hexandiol oder Adipinsäure aufgebaut wurden, flexibler als solche auf der Basis von Phthalsäure und Ethylenglykol. Des weiteren ist dem Fachmann die Steuerung der Eigenschaften über die Mitverwendung polyfunktioneller Stoffe wie Trimellitsäure oder Trimethylolpropan, die Verzweigungen in den Polyestermolekülen erzeugen, bekannt.

Entsprechend können die erfindungsgemäßen Formmassen zusätzlich auch Stoffe enthalten, die ausgewählt sind aus Härtungsbeschleunigern, Fotoinitiatoren vom Norrish-Typ 1 und 2, weiteren üblichen Additiven, Pigmenten und Füllstoffen allein oder in beliebigen Kombinationen untereinander. Entsprechend können die für die erfindungsgemäßen Formmassen verwendeten Polyester a) thermisch nach Zusatz von Stoffen härten, die beim Erhitzen Radikale bilden. Bekannte Radikalbildner sind z.B. Peroxide, Azoverbindungen, Azide und C-C-labile Stoffe. Eine erhebliche Beschleunigung der Härtung bzw. Absenkung der Härtungstemperatur ist mit Metall-Coinitiatoren, wie Kobalt-, Mangan-, Eisen-, Nickel- oder Bleiverbindungen, möglich.

Es hat sich gezeigt, daß die Polyester in Gegenwart von UV- Initiatoren vom Typ der α-Spalter (Norrish-Typ 1) oder der H-Donor/Akzeptor-Systeme (Norrish Typ 2) eine hohe UV-Empfindlichkeit aufweisen. Diese UV-Reaktivität ist insbesondere dann besonders hoch, wenn die ungesättigten Polyester a) und/oder der Vernetzer b) H-Akzeptor-Gruppen chemisch gebunden aufweisen. Diese können z.B. durch die Mitverwendung von einkondensierbaren Phenonverbindungen, wie Hydroxybenzophenon, Bishydroxybenzophenon oder Benzophenoncarbonsäuren bzw. deren Anhydriden, bei der Polykondensation der Polyester a) erhalten werden.

Die Erfindung betrifft außerdem die Verwendung der erfindungsgemäßen Formmasse als Tränk-, Verguß- oder Überzugsmasse für Bauteile, insbesondere für elektrische oder elektronische Bauteile und als Trägermaterial für flächige Isolierstoffe.

Bei der Herstellung dieser Tränk-, Verguß- oder Überzugsmassen im Bereich der Elektroisolierung kann die Härtung sowohl unter energiereicher Strahlung, bevorzugt UV-Licht oder durch Wärme unterhalb von 200°C, bevorzugt unterhalb von 130°C und besonders bevorzugt durch kombinierte Härtung mit UV-Licht und Wärme unterhalb von 130°C erfolgen. Dadurch ist sichergestellt, daß die Elektrobauteile nicht durch hohe Temperaturen bei der Härtung ihrer Isoliermassen zerstört werden. Außerdem können die Bauteile in rationeller Serienfertigung hergestellt werden, da die Härtung schnell erfolgt.

Die Härtung kann auch radikalisch bei Raumtemperatur mit bekannten Kombinationen von Peroxiden und Co-Initiatoren, wie Schwermetallsalzen sowie durch Wärme mit thermisch radikalliefernden Startern, wie Peroxiden, Azostartern oder C-C-labilen Verbindungen erfolgen. Die genannten Verfahren zur Härtung können auch in beliebigen Kombinationen verwendet werden. Dabei ist die kombinierte Härtung mit thermisch erzeugten Radikalen und/oder UV-Licht erzeugten Radikalen bevorzugt. Auch die Härtung zu einem B-Zustand, d.h. einem teilgehärteten Zustand, bei dem die Härtung unterbrochen ist und später wieder gestartet werden kann, ist möglich.

Eine mögliche Kombination besteht beispielsweise darin, daß die Formmasse zunächst mit UV-Licht an der Oberfläche gehärtet und dann mit Stoffen, die thermisch Radikale bereitstellen, unter Erwärmung weiter ausgehärtet wird. Wenn die Formmasse als Tränk-, Verguß- oder Überzugsmasse, d.h. als Isoliermasse z.B. in elektrischen Wicklungen verwendet werden soll, kann eine Verfahrensmodifikation an Bedeutung gewinnen, bei der die Isoliermasse im Inneren der Bauteile zunächst durch Stromwärme ganz oder zum Teil gehärtet wird, und die dann unter Umständen schlecht-gehärtete Oberfläche mit UV-Licht nachgehärtet bzw. -vernetzt wird, wobei gegebenenfalls durch Wärme auch das Innere der Wicklungen weiter vernetzt werden kann.

Im folgenden wird die Erfindung anhand von Beispielen näher erläutert:

### Beispiele

### Verbindung 1 (Monocarbonsäure gemäß allgemeiner Formel V)

In einem Rührkolben mit Heizung und Rückflußkühler werden

| | | |
|---|---|---|
| 710,81 g | Dicyclopentadien 93 %-ig | (5,0 Mol) |
| 490,30 g | Maleinsäureanhydrid | (5,0 Mol) |

eingewogen. Die Mischung wird unter einem leichten Stickstoffstrom auf 125°C erhitzt, und dann werden über einen Tropftrichter innerhalb einer Stunde

| | | |
|---|---|---|
| 95,00 g | Wasser 5,0 Mol + 5 g | (5,0 Mol + 5 g) |

zugegeben. Es wird bei 125°C eine Stunde nachreagieren gelassen. Es bildet sich eine Monocarbonsäure gemäß allgemeiner Formel V.

### Beispiel 1: ungesättigter Polyester a)

In einem Rührkolben mit Heizung und Destillieraufsatz werden

| | | |
|---|---|---|
| 300,00 g | Triethylenglykol | (2 Mol) |
| 134,00 g | Diethylenglykolmonoethylether | (1 Mol) |
| 516,80 g | Verbindung 1 | (2 Mol) |
| 156,60 g | Fumarsäure | (1,35 Mol) |
| 87,36 g | Benzophenontetracarbonsäuredi (ethylhexylester) | (0,15 Mol) |
| 4,00 g | Dibutylzinnoxid als Veresterungskatalysator | |
| 0,50 g | Hydrochinon | |

eingewogen. Es wird unter einem leichten Stickstoffstrom rasch auf 130°C aufgeheizt. Dann wird innerhalb von 4 ½ Stunden die Temperatur allmählich auf 190°C erhöht und dabei das entstehende Kondensationswasser abdestilliert. Es wird ein flüssiges Harz mit einer Säurezahl von 27 und einer Viskosität von 7880 mPas/25°C erhalten.

### Beispiel 2: ungesättigter Polyester a)

In einem Rührkolben mit Heizung und Destillieraufsatz werden

| | | |
|---|---|---|
| 300,00 g | Triethylenglykol | (2 Mol) |
| 134,00 g | Diethylenglykolmonoethylether | (1 Mol) |
| 516,80 g | Verbindung 1 | (2 Mol) |
| 174,00 g | Fumarsäure | (1,50 Mol) |
| 4,00 g | Dibutylzinnoxid | |
| 0,50 g | Hydrochinon | |

eingewogen.

Es wird unter einem leichten Stickstoffstrom rasch auf 130°C aufgeheizt. Dann wird innerhalb von 4 ½ Stunden die Temperatur allmählich auf 190°C erhöht und dabei das entstehende Kondensationswasser abdestilliert. Es wird ein flüssiges Harz mit einer Säurezahl von 22 und einer Viskosität von 2360 mPas/25°C erhalten.

### Beispiel 3: ungesättigter Polyester a)

In einem Rührkolben mit Heizung und Destillieraufsatz werden als:

### Vorlage:

| | | |
|---|---|---|
| 1441,5 g | Maleinsäureanhydrid | (17,7 Mol) |
| 546,6 g | Reaktionsprodukt aus 1 mol Tetrahydrophthalsäure und 1 mol Ethanolamin | (2,8 Mol) |
| 56,0 g | Wasser | (3,1 Mol) |

### Zulauf 1:

| | | |
|---|---|---|
| 398,0 g | Dicyclopentadien 93 % | (2,8 Mol) |

### Zugabe 1:

| | | |
|---|---|---|
| 491,0 g | Rizinusöl (OH-Zahl 160) | |
| 1009,3 g | 2-Methyl-propandiol-1,3 | (11,2 Mol) |
| 7,4 g | Dibutylzinnoxid | |

eingewogen.

### Vorgehensweise:

Die Vorlage wird auf 90°C erwärmt. Es erfolgt eine exotherme Reaktion. Dann wird der Zulauf 1 innerhalb von 30 Minuten bei etwa 116 - 128°C zugegeben und eine Stunde lang bei 125°C gehalten. Die Heizung wird entfernt und die Zugabe 1 eingerührt. Unter einem leichten Stickstoffstrom wird weiter rasch auf 130°C aufgeheizt, anschließend innerhalb von 6 Stunden die Temperatur allmählich auf 190°C erhöht und dabei das entstehende Kondensationswasser abdestilliert.
Es wird ein flüssiges Harz mit einer Säurezahl von 19,8 und einer Viskosität von 194 Pas / 25°C erhalten.

### Beispiel 4: Isoprenolterminierter niedrigviskoser polymerer Vernetzer b)

In einem Rührkolben mit Heizung und Wasserauskreiser werden

| | |
|---|---|
| 1753,7 g | Adipinsäure |
| 1033,6 g | Isoprenol |
| 368,4 g | Glyzerin |
| 200,0 g | Toluol |
| 6,0 g | Dibutylzinnoxid |

eingewogen.

Es wird unter einem leichten Stickstoffstrom rasch auf 130°C aufgeheizt. Unter kräftigem Sieden wird dann Wasser ausgekreist. Nach ca. 3 Stunden läßt die Wasserbildung nach. Dann wird die Temperatur allmählich innerhalb von ca. 2 Stunden auf 190°C erhöht und dabei das Toluol und noch etwas Wasser abdestilliert.

Es wird ein Polyester mit einer Säurezahl von 12,6 und einer Viskosität von 310 mPas bei 25°C erhalten.

### Prüfung der Beispielprodukte auf Härtbarkeit:

Die in den Beispielen 1 bis 3 hergestellten Polyester a) werden zur besseren Rührbarkeit auf 40°C erwämt und im Verhältnis 70:30 mit dem polymeren Vernetzer b) des Beispiels 4 gemischt. Dann werden - mit Ausnahme der Mischung der Komponenten aus Beispiel 1 und 4 - 4 % tert.-Butylperbenzoat und 2 % "Irgacure 184" (Fotoinitiator, Hersteller CIBA Specialities, Basel), bezogen auf die Gesamtmenge, zugegeben.

Diese Mischungen sind bei Raumtemperatur gut fließend und haben bei 25°C die folgenden Viskositäten:

Mischung der Komponenten aus:

| | |
|---|---|
| Beispiel 1 + Beispiel 4: | 2480 mPas |
| Beispiel 2 + Beispiel 4: | 1090 mPas |
| Beispiel 3 + Beispiel 4: | 11860 mPas. |

Von diesen Mischungen wird jeweils soviel in einen tiefen Blechdeckel gegossen, daß dieser ca. 1,5 cm hoch gefüllt ist. Die Blechdeckel werden dann auf einer Heizplatte bei 50°C mit einer Quecksilbermitteldrucklampe mit einer Energie von 80 mW/cm² für 60 Sekunden bestrahlt. Dabei bildet sich eine noch ganz leicht klebrige Haut von ca. 2 mm Dicke, unter der die Hauptmasse flüssig bleibt. Die Blechdeckel werden dann 2 Stunden in einem Ofen bei 150°C getempert. Nach dem Abkühlen werden kompakt durchgehärtete Hartblöcke erhalten.

Proben der katalysierten, gebrauchsfertigen Mischungen werden bei 40°C über 48 Stunden gelagert. Danach haben sich weder ihre Viskosität noch ihr Härteverhalten geändert.

## Patentansprüche

1. Fomomasse auf der Basis ungesättigter Polyester a) wobei die zum Aufbau der Polyester a) eingeseteten Verbindungen ausgewählt sind aus der Gruppe bestehend aus Adipinsäure, Korksäure, Phthalsäureisomeren Tetrahydrophthalsäure, Endomethylen-tetrahydrophthalsäure, Hexahydrvphthalsäure, Fumarsäure, Maleinsäure, Maleinsäureanhydrid, Itaconsäure, Citraconsäure, Trimellitsäure, Pyromellitsäure, Ethylenglykol, Polyethylenglykolen, Propylenglykol, Polypropylenglykolen, Butandiolisomeren, Hexandiol, Neopentylglykol, Trimethylolpropan, Glycerin, Pentaerythrith, Bisphenol A, hydriertem Bisphenol A, OH-polyfunktionellen Polymeren, wie Hydroxylgruppen-modifizierten Polybutadienen oder Hydroxylgruppen-tragenden Polyurrethanprepolymeren und Epoxydharzen, polyfunktionellen Naturstoffen oder deren Folgeprodukten, wie Leinölfettsäure, Dimer- und Polymerleinölfettsäsure, Rizinusöl oder Rizinusölfettsäure, wobei durch (Mit)-Verwendung von mehrfochfunktionellen Aminen auch Polyester a) mit Amidstrukturen erhalten werden können and durch Mitverwendung von polyfunktionellen Stoffen wie Trimellisäure oder Trimethylolpropan Verzweigungen in den Polyestermolekülen erzugt werden können, mit einem Gehalt an einem polymeren Vernetzer b) in Form von in der Polymerhauptkette gesättigten und/oder ungesättigten Polyestern, der, bezogen auf die Polymerhauptkette, terminale Propenyl- und/oder Isoprenylgruppenaufweist wobei die terminalen Propenyl- und/oder Isoprenylgruppen durch Nitrowerdung von isopropenylbenzyl-m-isopropylisocyanat, 1-Propenylglycidylether oder isopropanol bei der Herstellung der polyester erhalten werden, **dadurch gekennzeichnet, daß** der ungesättigte Polyester a) und/oder der Vernetzer b) Struktureinheiten der allgemeinen Formel I und/oder II aufweist:

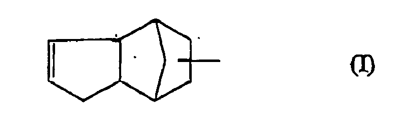

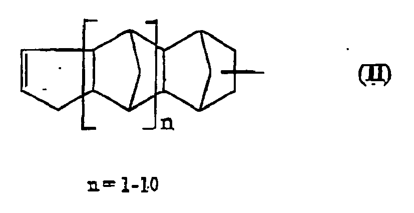

2. Formmasse nach Anspruch 1, **dadurch gekennzeichnet, daß** die Polymerhauptkette des Vemetzers b) linear, beliebig verzweigt oder dentrimer aufgebaut ist.

3. Formmasse nach Anspruch 1 oder 2, **dadurch gekennzeichnet, daß** der Vernetzer b), bezogen auf die Polymerhauptkette, terminale Propenylether-und/oder Isoprenylethergruppen aufweist.

4. Formmasse nach einem der Ansprüche 1 bis 3, **dadurch gekennzeichnet, daß** der Vernetzer b), bezogen auf die Polymerhauptkette, terminale Propanylester- und/oder Isoprenylestergruppen aufweist.

5. Formmasse nach einem der Ansprüche 1 bis 4, **dadurch gekennzeichnet, daß** sie zusätzlich Stoffe ausgewählt aus Härtungsbeschleunigern, Fotoinitiatoren vom Norrish-Typ 1 und 2, weiteren üblichen Additiven, Pigmenten und Füllstoffen, allein oder in beliebigen Kombinationen untereinander, enthält.

6. Formmasse nach Anspruch 5, **dadurch gekennzeichnet, daß** die Fotoinitiatoren chemisch an den ungesättigten Polyester a) und/oder den Vernetzer b) gebunden sind.

7. Verwendung der Formmasse nach einem der Ansprüche 1 bis 6 als Tränk-, VerguB- oder Überzugsmasse für Bauteile, insbesondere für elektrische oder elektronische Bauteile.

8. Verwendung der Formmasse nach einem der Ansprüche 1 bis 6 als Trägermaterial für flächige Isolierstoffe.

## Claims

1. Moulding compound based on unsaturated polyesters a), the compounds used to synthesize the polyesters a) being selected from the group consisting of adipic acid, suberic acid, phthalic acid isomers, tetrahydrophthalic acid, endomethylenetetrahydrophthalic acid, hexahydrophthalic acid, fumaric acid, maleic acid, maleic anhydride, itaconic acid, citraconic acid, trimellitic acid, pyromellitic acid, ethylene glycol, polyethylene glycols, propylene glycol, polypropylene glycols, butanediol isomers, hexanediol, neopentyl glycol, trimethylolpropane, glycerol, pentaerythritol, bisphenol A, hydrogenated bisphenol A, OH-polyfunctional polymers, such as hydroxyl-modified polybutadienes or hydroxyl-bearing polyurethane prepolymers and epoxy resins, polyfunctional natural substances or derivatives thereof, such as linseed oil fatty acid, dimeric and polymeric linseed oil fatty acid, castor oil, or castor oil fatty acid, the (additional) use of polyfunctional amines also allowing polyesters a) having amide structures to be obtained and the additional use of polyfunctional compounds such as trimellitic acid or trimethylolpropane making it possible for branches to be produced in the polyester molecules, said moulding compound including a polymeric crosslinker b) in the form of polyesters unsaturated and/or saturated in the main polymer chain, said crosslinker having, based on the main polymer chain, terminal propenyl and/or isoprenyl groups, the terminal propenyl and/or isoprenyl groups being obtained through additional use of isopropenylbenzyl-m-isopropyl isocyanate, 1-propenyl glycidyl ether or isoprenol in the preparation of the polyesters, **characterized in that** the unsaturated polyester a) and/or the crosslinker b) has structural units of the general formula I and/or II:

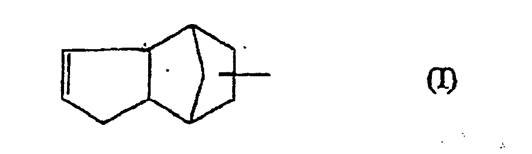

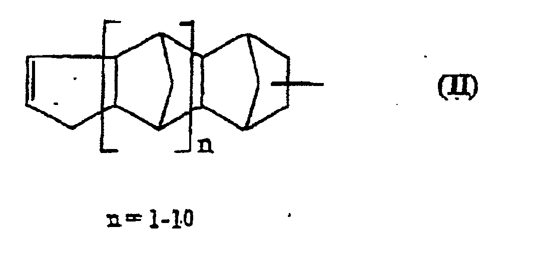

2. Moulding compound according to Claim 1,
**characterized in that** the main polymer chain of the crosslinker b) is linear, arbitrarily branched or dendrimeric in construction.

3. Moulding compound according to Claim 1 or 2,
**characterized in that** the crosslinker b), based on the main polymer chain, has terminal propenyl ether and/or isoprenyl ether groups.

4. Moulding compound according to any one of Claims 1 to 3, **characterized in that** the crosslinker b), based on the main polymer chain, has terminal propenyl ester and/or isoprenyl ester groups.

5. Moulding compound according to any one of Claims 1 to 4, **characterized in that** it further comprises substances selected from curing accelerants, photoinitiators of Norrish type 1 and 2, further customary additives, pigments and fillers, alone or in any desired combinations with one another.

6. Moulding compound according to Claim 5,
**characterized in that** the photoinitiators are chemically attached to the unsaturated polyester a) and/or the crosslinker b).

7. Use of the moulding compound according to any one of Claims 1 to 6 as an impregnating, casting or coating composition for components, especially for electrical or electronic components.

8. Use of the moulding compound according to any one of Claims 1 to 6 as carrier material for sheetlike insulating materials.

## Revendications

1. Matières moulables à base d'un polyester insaturé a), les composés mis en oeuvre pour l'élaboration du polyester a) étant choisis parmi le groupe consistant en l'acide adipique, l'acide subérique, les isomères de l'acide phtalique, l'acide tétrahydrophtalique, l'acide endométhylènetétrahydrophtalique, l'acide hexahydrophtalique, l'acide fumarique, l'acide maléique, l'anhydride maléique, l'acide itaconique, l'acide citraconique, l'acide trimellitique, l'acide pyromellitique, l'éthylèneglycol, les polyéthylèneglycols, le propylèneglycol, les polypropylèneglycols, les isomères du butanediol, l'hexanediol, le néopentylglycol, le triméthylolpropane, la glycérine, le pentaérythritol, le bisphénol A, le bisphénol A hydrogéné, des polymères à polyfonction OH, comme des polybutadiènes modifiés par des radicaux hydroxyle, ou des prépolymères de polyuréthanne portant des radicaux hydroxyle et des résines époxydes, des substances naturelles polyfonctionnelles ou leurs dérivés, comme les acides gras de l'huile de lin, les acides gras dimères et polymères de l'huile de lin, l'huile de ricin ou les acides gras de l'huile de ricin, où par utilisation (conjointe) d'amines polyfonctionnelles, on peut obtenir également des polyesters a) avec des structures amide et par utilisation conjointe de substances polyfonctionnelles comme l'acide trimellitique ou le triméthylolpropane, on peut produire des ramifications dans les molécules de polyester, avec une teneur en agent de réticulation polymère b) sous forme de polyesters saturés et/ou insaturés dans la chaîne polymère principale, qui, sur base de la chaîne polymère principale, présente des radicaux propényle et/ou isoprényle, où les radicaux propényle et/ou isopropényle terminaux sont obtenus par utilisation conjointe d'isopropénylbenzyl-m-isopropylisocyanate, de 1-propénylglycidyléther ou d'isoprénol lors de la préparation du polyester,
**caractérisées en ce que** le polyester a) insaturé et/ou l'agent de réticulation b) présente des unités de structure de la formule générale I et/ou II :

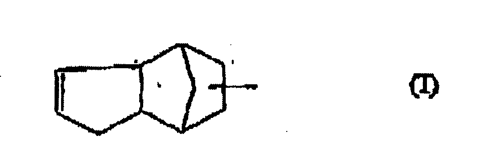

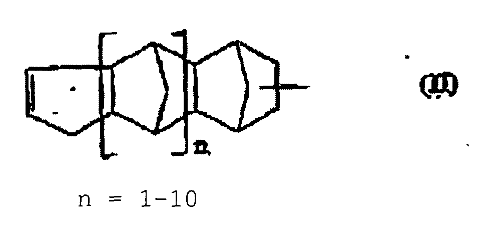

2. Matières moulables selon la revendication 1,
**caractérisées en ce que** la chaîne polymère principale de l'agent de réticulation b) est linéaire, ramifiée de manière quelconque ou de type dendrimère.

3. Matières moulables selon la revendication 1 ou 2,
**caractérisées en ce que** l'agent de réticulation b), par rapport à la chaîne polymère principale, présente des radicaux propényléther et/ou isoprényléther terminaux.

4. Matières moulables selon l'une des revendications 1 à 3, **caractérisées en ce que** l'agent de réticulation b), par rapport à la chaîne polymère principale, présente des radicaux propénylester et/ou isoprénylester terminaux.

5. Matières moulables selon l'une des revendications 1 à 4, **caractérisées en ce qu'**elles contiennent des substances supplémentaires choisies parmi les accélérateurs de durcissement, les photoinitiateurs de type Norish 1 et 2, d'autres additifs usuels, des pigments et des charges, seuls ou en combinaisons quelconques les uns avec les autres.

6. Matières moulables selon la revendication 5,
**caractérisées en ce que** les photoionitiateurs sont liés de manière chimique sur le polyester insaturé a) et/ou l'agent de réticulation b).

7. Utilisation des matières moulables selon l'une des revendications 1 à 6, comme masse d'imprégnation, de remplissage ou de revêtement pour pièces, en particulier pour pièces électriques ou électroniques.

8. Utilisation des matières moulables selon l'une des revendications 1 à 6, comme matériau support pour substance isolante plane.
